# EUROPÄISCHE PATENTSCHRIFT

(11) **EP 1 005 944 B1**
(45) Veröffentlichungstag und Bekanntmachung des Hinweises auf die Patenterteilung: **01.09.2004**
(21) Anmeldenummer: 99121819.9
(22) Anmeldetag: 04.11.1999
(51) Int. Cl.: B23K 26/00, B23K 26/02, B23K 33/00, B23K 26/24, B23K 26/32

(54) **Laserstrahl-Schweissverfahren für Überlappnähte an beschichteten Blechen**
Laser beam welding process for overlap seams on coated metal sheets
Procédé de soudage au faisceau laser pour des joints par recouvrement de tôles revêtues

(30) Priorität: 24.11.1998 DE 19854217
(43) Veröffentlichungstag der Anmeldung: 07.06.2000
(73) Patentinhaber: Bayerische Motoren Werke Aktiengesellschaft, 80809 München (DE)
(72) Erfinder: Hornig, Hans, 83536 Gars (DE)

(56) Entgegenhaltungen:
- EP-A- 0 452 138
- EP-A- 0 707 920
- EP-A- 0 771 605
- DE-C- 3 812 448
- US-A- 4 682 002

## Beschreibung

Die Erfindung betrifft ein Laserstrahl-Schweißverfahren für Überlappnähte an beschichteten Blechen, insbesondere an zinkbeschichteten Stahlblechen, wobei (konstruktiv) ein Ausgasungsraum für das im Schweißbereich verdampfende Beschichtungsmaterial vorgesehen ist. Ferner betrifft die Erfindung eine Laserstrahl-Schweißvorrichtung zur Durchführung des hier vorgeschlagenen Laserstrahl-Schweißverfahrens. Zum technischen Umfeld wird neben der EP 0 707 920 A2 insbesondere auf die DE 38 12 448 C1 verwiesen, welche als nächstkommender Stand der Technik angesehen wird.

Beispielsweise im Karosserierohbau von Fahrzeugen werden zum wirkungsvollen Schutz gegen Korrosion zunehmend zinkbeschichtete Bleche verwendet. Vorwiegend sind dies ein- bzw. zweiseitig elektrolytisch oder feuerverzinkte Bleche mit Beschichtungen von 5 -15 µm Dicke je Seite. Beim Überlappnaht-Schweißen verzinkter Bleche mit einem Laserstrahl stört das Verdampfen der Zinkschicht den Schweißprozeß. Unter dem Einfluß der fokussierten Laserstrahlung wird das Stahlblech bei ca. 1500°C schmelzflüssig, das Zink der Oberflächenbeschichtung verdampft jedoch bereits bei 907°C zwischen den Kontaktstellen der sich überlappenden Bleche. Wegen des verfahrensspezifischen kleinen Schmelzbades und wegen seiner kurzen Existenzzeit wirkt sich die im Verhältnis große abzuführende Zinkdampfmenge nachteilig auf die Qualität der Laserschweißverbindung aus, da die Dämpfe durch die Schmelze nach oben oder unten entweichen müssen. Turbulente Schmelzbadbewegungen und hochenergetische Eruptionen mit teilweise vollständigem Badauswurf verursachen poröse unbrauchbare Schweißnähte, die den geforderten Gebrauchseigenschaften wie Festigkeit und Dichtheit nicht gerecht werden können. Ferner führen die ausgeworfenen Metallspritzer zur Beschädigung und Zerstörung der optischen Komponenten (Spiegel, Linsen) im Laserschweißkopf was die Verfügbarkeit und Standzeit dieser Komponenten sehr stark minimiert.

Der Nachteil der undichten Schweißnähte kann grundsätzlich durch einen nachträglichen Auftrag von flüssigen Kunststoff auf die qualitativ schlechten Nahtoberflächen behoben werden. Jedoch stellt ein derartiges nachträgliches Abdichten der qualitativ schlechten Überlappnähte mit flüssigem Kunststoff einen kostenintensiven zusätzlichen Arbeitsgang dar.

Es wurde auch bereits vorgeschlagen, einen sog. Ausgasungsraum für den entstehenden Zinkdampf neben oder entlang des Schweißnahtverlaufes (konstruktiv) vorzusehen, vgl. die o.g. DE 38 12 448 C1. Erreicht wird dies durch eine geeignete Gestaltung der Stoßgeometrie, d.h. durch die Einstellung eines Stoßspaltes oder durch die Positionierung der Schweißnaht dicht an Hohlräumen. Möglich ist auch die Erzeugung von Ausgasungsräumen durch Einbringen von Rändelmustem oder durch Einarbeiten von Mikrokanalstrukturen in die Materialoberfläche. Dabei erfolgt durch eine vorausgehende Laser-Oberflächenbearbeitung gleichzeitig ein partieller Zinkschichtabtrag an den Fügestellen. Jedoch hat auch dies einen zusätzlichen Arbeitsgang zur Folge, was einen erheblichen Nachteil darstellt. Ferner ist für die erforderliche richtige Lage der Schweißnaht zu den eingearbeiteten Ausgasungsräumen eine hohe Positioniergenauigkeit der Fügepartner, d.h. der beiden miteinander zu verschweißenden Bleche zueinander erforderlich, womit Positionierprobleme in Zusammenhang mit der Reproduzierbarkeit der Überlapp-Schweißnaht auftreten können.

Im Hinblick hierauf ein verbessertes Laserstrahl-Schweißverfahren für Überlappnähte nach dem Oberbegriff des Anspruchs 1 aufzuzeigen, ist Aufgabe der vorliegenden Erfindung.
Die Lösung dieser Aufgabe ist dadurch gekennzeichnet, daß die beiden miteinander zu verschweißenden Bleche auf der einen Seite der Überlappnaht aufeinander aufliegen und auf der anderen Seite der Überlappnaht aufgrund eines im Oberblech vorgesehenen Radius geringfügig voneinander beabstandet sind, um dort zwischen sich den Ausgasungsraum zu bilden, und daß mittels eines Sensors dieser Radius des Oberbleches erkannt und in einer Recheneinheit dahingehend ausgewertet wird, daß die Brennfleckmitte des Schweiß-Laserstrahles und somit auch die Überlappnaht in einen engen Sollbereich positioniert wird, der innerhalb des Bereiches dieses Radius des Oberbleches liegt.
Vorteilhafte Weiterbildungen sind Inhalt der weiteren Ansprüche; insbesondere ist hierbei auch eine Laserstrahl-Schweißvorrichtung zur Durchführung des erfindungsgemäßen Laserstrahl-Schweißverfahrens angegeben.

Erfindungsgemäß ist ein im wesentlichen seitlich der Überlapp-Schweißnaht liegender Ausgangsraum vorgesehen, der dadurch gebildet wird, daß das sog. Oberblech - hierbei handelt es sich um das dem Schweiß-Laserstrahl zugewandte Blech - nicht vollständig plan auf dem damit zu verschweißenden sog. Unterblech aufliegt, sondern unter einem Radius quasi abgewinkelt ist. Die Schweißnaht verläuft dann im wesentlichen längs dieser virtuellen, da aufgrund des Radius' tatsächlich nicht vorhandenen Winkel-Kante. In anderen Worten ausgedrückt bedeutet dies, daß auf der einen Seite der Schweißnaht das Oberblech auf dem Unterblech im wesentlichen plan aufliegt, während auf der anderen Seite der Schweißnaht das Oberblech vom Unterblech beabstandet ist, so daß hier der gewünschte (einzige) Ausgasungsraum vorliegt.

Eine gewünschte qualitativ hochwertige Schweißnaht kann mit einer derartigen Gestaltung der Bleche, insbesondere des Oberbleches, nun dann erzielt werden, wenn die Schweißnaht in einen relativ engen Sollbereich hinein positioniert wird, wobei dieser Sollbereich durch den besagten Radius des Oberbleches beschrieben werden kann, bzw. genauer innerhalb des Bereiches dieses besagten Radius liegt. Bei Vorliegen üblicher Blechdicken liegt der als Innenradius zur Blechoberfläche gemessene Radius des Oberbleches in der Größenordnung zwischen 1,0 mm bis 3,0 mm. Dann kann sich der sog. Sollbereich, in den hinein die Brennfleckmitte des Schweiß-Laserstrahles positioniert wird, ausgehend vom Anfangspunkt des Radius des Oberbleches über maximal 0,8 mm zum Ausgasungsraum hin erstrecken, wobei der Anfangspunkt des Radius dort liegt, wo das Oberblech gerade noch plan auf dem Unterblech aufliegt.

Noch genauer kann die Lage des Schweiß-Laserstrahles zur Erzielung optimaler Ergebnisse über eine Schnittlinie einer virtuellen Ebene mit dem Oberblech im Bereich von dessen besagten Radius beschrieben werden. Diese virtuelle Ebene wird dabei von bzw. in einer Recheneinheit unter einem bestimmten Abstand parallel zu demjenigen Flächenabschnitt des Oberbleches gelegt, der sich auf dem Unterblech direkt aufliegend auf der dem Ausgasungsraum gegenüberliegenden Seite der Überlappnaht befindet. Um die entsprechenden Rechenoperationen ausführen zu können, ist selbstverständlich ein bevorzugt optischer Sensor erforderlich, der den besagten Radius im Oberblech erkennt und anhand von dessen Signalen auch die genannte virtuelle Ebene in den gewünschten Abstand zur Oberblech-Oberfläche gelegt werden kann. Gesteuert von der bereits genannten Recheneinheit kann dann die Brennfleckmitte des Schweiß-Laserstrahles längs der besagten Schnittlinie positioniert werden. Wird der Abstand zwischen der virtuellen Ebene und der Oberblech-Oberfläche in der Größenordnung von 0,1 mm bis 0,3 mm gewählt und wird der Schweißstrahl und somit auch die Schweißnaht in die Schnittlinie zwischen der virtuellen Ebene und dem Oberblech gelegt, so zeichnet sich die Schweißnaht durch höchste Qualität aus, da zum einen ein ausreichend großer Ausgasungsraum vorhanden ist und zum anderen eine sichere Schweißnaht zwischen den beiden Blechen hergestellt werden kann.

Besser erläutert werden kann die Erfindung anhand der beigefügten Figurendarstellungen, in denen ein bevorzugtes Ausführungsbeispiel abstrahiert dargestellt ist. Im einzelnen zeigt
- Fig.1: stark vergrößert zwei mittels des erfindungsgemäßen Laserstrahl-Schweißverfahrens miteinander verbundene Bleche,
- Fig.2: eine Prinzipdarstellung einer für dieses Verfahren besonders geeigneten Laserstrahl-Schweißvorrichtung während des Schweißprozesses, sowie
- Fig.3: eine detaillierte Darstellung der wesentlichen Bestandteile der Laserstrahl-Schweißvorrichtung nach Fig.2.

Mit der Bezugsziffer 1 ist ein sog. Oberblech bezeichnet, welches mit zumindest einem sog. Unterblech 2 durch eine senkrecht zur Zeichenebene verlaufende Überlapp-Schweißnaht 3 (auch Überlappnaht 3 genannt) durch Laserschweißung verbunden werden soll. Bei den beiden Blechen 1, 2 handelt es sich um zinkbeschichtete Stahlbleche, jedoch ist die vorliegende Erfindung grundsätzlich auch an anderen insbesondere beschichteten Blechen, die miteinander durch eine Laserschweißung längs der Überlappnaht 3 verbunden werden sollen, anwendbar. Beim hier erläuterten Ausführungsbeispiel ist das ca. 0,8 mm dicke Oberblech 1 dünner als das Unterblech 2, jedoch ist auch dies für das Wesen der vorliegenden Erfindung unerheblich.

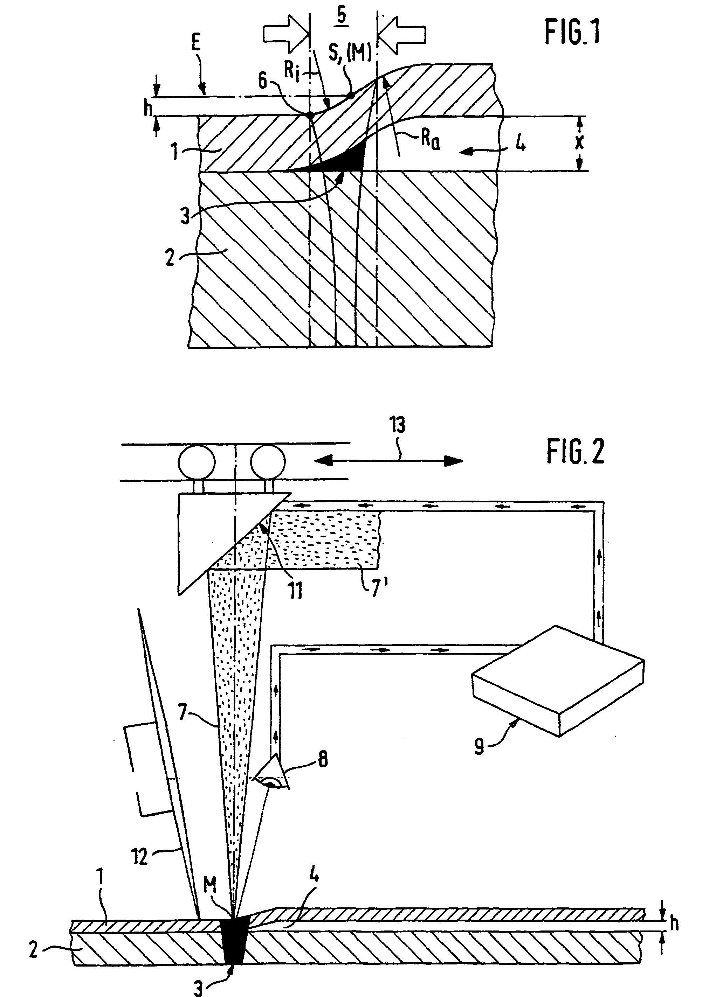

Da die beiden miteinander durch eine Laserschweißung zu verbindenden Bleche 1, 2 beschichtet sind, soll im Bereich der bzw. genauer neben der Überlappnaht 3 ein sog. Ausgasungsraum 4 vorhanden sein, in welchen das vor Erreichen des lokalen Schmelzpunktes der beiden Bleche 1, 2 lokal bereits ausdampfende Beschichtungsmaterial entweichen kann. Für die in Figur 1 vergrößert dargestellte Schweißverbindung befindet sich der Ausgasungsraum 4 rechtsseitig der Überlappnaht 3. Wie ersichtlich liegen die beiden Bleche 1, 2 linksseitig der Überlappnaht 3 direkt aufeinander auf und sind rechtsseitig der Überlappnaht 3 geringfügig (nämlich um einen Betrag x, der hier in der Größenordnung von 1,5 mm liegt und zumindest 0,5 mm betragen sollte) voneinander beabstandet.

Der Ausgasungsraum 4 wird wie ersichtlich dadurch gebildet, daß das Oberblech 1 eine durch zwei Radien Rᵢ und Rₐ definierte Stufe aufweist, die das Höhenmaß x besitzt. Der Radius Rᵢ bzw. Innen-Radius Rᵢ wird bezüglich der dem Unterblech 2 abgewandten Seite des Oberbleches 1 von oben her gemessen und beginnt an derjenigen Stelle bzw. hat seinen Ausgangspunkt 6 an derjenigen Stelle, an der das Oberblech 1 noch am zumindest im Schweißnahtbereich planen Unterblech 2 anliegt und parallel zu diesem ist. Der sog. Außen-Radius Rₐ, der sich an den Innen-Radius Rᵢ anschließt, wird auf die gleiche Seite des Oberbleches 1 bezogen, dabei jedoch von der anderen, hier unteren Seite durch das Oberblech 1 hindurch gemessen und endet im Endbereich der genannten Stufe an derjenigen Stelle, an der diese Seite des Oberbleches 1 wieder im wesentlichen parallel zum Unterblech 2 ist.

Mit den oben genannten Werten für die Dicke des Oberbleches 1 sowie für das Höhenmaß x der genannten Stufe liegt der Wert des Innen-Radius Rᵢ in der Größenordnung von 1,5 mm und derjenige des Außen-Radius Rₐ in der Größenordnung von 2,0 mm, jedoch können für die Größe dieser Radien R, und Rₐ generell sinnvolle Wertebereiche angegeben werden, die für den Innen-Radius Rᵢ in der Größenordnung zwischen 1,0 mm und 3,0 mm (und größer) und für den Außen-Radius Rₐ in der Größenordnung zwischen 1,5 mm und 3,5 mm liegen, wobei - wie aus den weiteren Erläuterungen hervorgeht - der sog. Außen-Radius Rₐ für das Wesen der Erfindung unerheblich ist. Wie aus der Figurendarstellung klar ersichtlich wird, wird nämlich bereits alleine durch den Innen-Radius Rᵢ der gewünschte Ausgangsraum 4 gebildet, wenn - wie im weiteren ausführlich erläutert wird - die Schweißnaht 3 in einen entsprechend günstigen Bereich gelegt wird. Tatsächlich muß der Außen-Radius Rₐ und somit die genannte Stufe mit dem Höhenmaß x überhaupt nicht vorhanden sein; vielmehr ist es ausreichend, wenn das Oberblech 1 auf der einen Seite der Schweißnaht 3 geringfügig vom Unterblech 2 beabstandet ist, und zwar aufgrund dessen, daß das Oberblech 1 den hier sog. Innen-Radius Rᵢ (bzw. allgemein einen Radius) aufweist und somit quasi abgewinkelt vom Unterblech 2 absteht. Dabei kann das Oberblech 1 durchaus an derjenigen Stelle, auf die in **Figur 1** der den Radius Rₐ kennzeichnende Pfeil weist, enden.

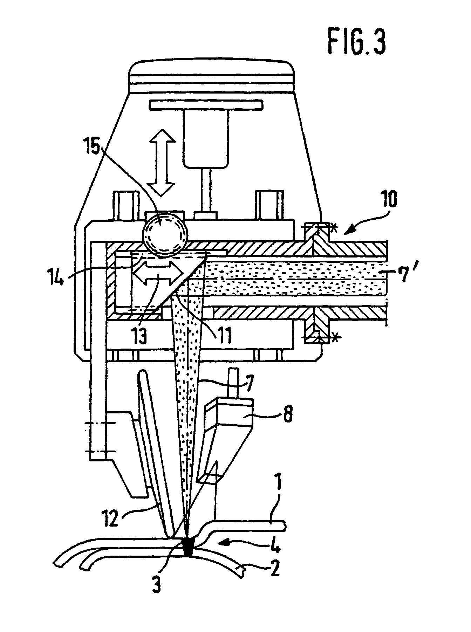

Nun wurde erkannt, daß eine optimale Überlapp-Schweißnaht 3 zwischen diesen beiden Blechen 1, 2, dann hergestellt werden kann, wenn sich diese Überlappnaht 3 in einem engen, im Bereich des (wesentlichen) Radius Rᵢ liegenden Sollbereich 5 befindet. Damit die Überlappnaht 3 in diesem Sollbereich 5 entsteht, muß der in den **Figuren 2, 3** mit der Bezugsziffer 7 bezeichnete Schweiß-Laserstrahl derart positioniert werden, daß sich dessen (dem Fachmann bekannte) Brennfleckmitte M in dem genannten Sollbereich 5 befindet. Dabei erstreckt sich dieser Sollbereich 5 in der Zeichenebene ausgehend vom Anfangspunkt 6 des Innen-Radius Rᵢ über eine Strecke von maximal 0,8 mm zum Ausgasungsraum 4 (und somit auch zum Beginn des Außen-Radius Rₐ) hin.

Um sicherzustellen, daß die Brennfleckmitte M des Schweiß-Laserstrahles 7 möglichst exakt in diesen Sollbereich 5 gelegt wird, wird die Lage der besagten Stufe im Oberblech 1 bzw. genauer die Lage des Radius' Rᵢ mittels eines Sensors 8 erkannt, so daß anhand der mit diesen Sensor 8 gewonnenen Lageerkennung die Position des Schweiß-Laserstrahles 7 wie gewünscht eingestellt werden kann. Bevorzugt ist der nach dem Prinzip eines Lichtschnittsensors arbeitende Sensor 8 an der in ihrer Gesamtheit mit der Bezugsziffer 10 bezeichneten Laserstrahl-Schweißvorrichtung befestigt, welche den Schweiß-Laserstrahl 7 auf die miteinander zu verschweißenden Bleche 1, 2 richtet (vgl. **Figur 2**). Dabei werden die Ausgangssignale des Sensors 8 in einer Recheneinheit 9 derart weiterverarbeitet, daß dieser Schweiß-Laserstrahl 7 in den gewünschten Sollbereich 5 fokussiert wird.

Zurückkommend auf **Figur 1** hat sich gezeigt, daß die besten Resultate hinsichtlich einer qualitativ hochwertigen Schweißnaht 3 dann erzielt werden, wenn die Position der Brennfleckmitte M des Schweiß-Laserstrahles 7 auf einen noch engeren Bereich als den ohnehin schon relativ engen Sollbereich 5 eingeschränkt wird. Hierzu wird eine Schnittlinie S zwischen der Oberfläche des Oberblechs 1 im Bereich von dessen (wesentlichen) Radius Rᵢ und einer virtuellen Ebene E ermittelt, die unter einem Abstand h parallel zu demjenigen Flächenabschnitt des Oberbleches 1 verläuft, der sich auf dem Unterblech aufliegend auf der dem Ausgasungsraum 4 gegenüberliegenden Seite der Überlappnaht 3 befindet. Zumindest im wesentlichen längs dieser Schnittlinie S wird dann die Brennfleckmitte M des Schweiß-Laserstrahles 7 positioniert. Beste Ergebnisse hinsichtlich der Schweißnaht-Qualität stellen sich ein, wenn der Abstand h der virtuellen Ebene E von der Oberfläche des Oberbleches 1 zwischen 0,1 mm und 0,3 mm beträgt, d.h. insbesondere in der Größenordnung von 0,2 mm liegt.

In diesem Zusammenhang sei nochmals wiederholt, daß sich die Schweißnaht 3 grundsätzlich senkrecht zur Zeichenebene erstreckt, d.h. es liegt eine längere Schweißnaht 3 vor, die in den **Figuren 1, 2** im Querschnitt gezeigt ist, und die darüber hinaus in der Ebene der beiden Bleche 1, 2 selbstverständlich auch einen Kurvenverlauf besitzen kann. Wie beim Laserschweißen üblich wird nun auch hier die Brennfleckmitte M des Schweiß-Laserstrahles 7 längs des gewünschten Schweißnaht-Verlaufes verfahren bzw. positioniert, wobei nach der vorliegenden Erfindung die Brennfleckmitte M erheblich exakter als bislang üblich positioniert wird, und zwar bezüglich des Ausgasungsraumes 4 bzw. bezüglich des Radius Rᵢ des Oberbleches 1 in der beschriebenen Weise.

Bereits angesprochen wurde die virtuelle Ebene E, die mit dem Oberblech 1 im Bereich von dessen (wesentlichen, da den gewünschten Abstand zwischen Oberblech 1 und Unterblech 2 erzeugenden) Radius Rᵢ geschnitten wird, so daß eine (zumindest im wesentlichen) senkrecht zur Zeichenebene verlaufende Schnittlinie S entsteht, längs derer dann die Brennfleckmitte M des Schweiß-Laserstrahles 7 bewegt wird, um die gewünschte (optimale) Schweißnaht 3 zu erhalten. Bereits genannt wurde ein insbesondere optischer Sensor 8, der den Radius Rᵢ im Oberblech 1 erkennt. Unter Auswertung der Signale dieses Sensors 8 kann die ebenfalls kurz angesprochene Recheneinheit 9 die parallel zum linksseitig der Schweißnaht 3 liegenden Flächenabschnitt des Oberbleches 1 verlaufende (virtuelle) Ebene E bestimmen, bzw. diese Ebene E unter einem Abstand h (in der Größenordnung von 0,2 mm) parallel zum genannten Flächenabschnitt legen. Auch die weitere Rechenoperation, nämlich die Verschneidung der Ebene E mit der dem Sensor 8 (und somit der Laserstrahl-Schweißvorrichtung 10) zugewandten Oberfläche des Oberbleches 1 im Bereich von dessen (wesentlichem) Radius Rᵢ wird in dieser Recheneinheit 9 durchgeführt, ebenso wird gesteuert von der Recheneinheit 9 der Schweiß-Laserstrahl 7 bzw. dessen Brennfleckmitte M wie beschrieben positioniert.

Dabei sei ausdrücklich darauf hingewiesen, daß bei diesen Rechenoperationen in der Recheneinheit tatsächlich nicht unbedingt die Ebene E mit dem Oberblech 1 zum Schnitt gebracht werden muß, sondern es kann diese Rechenoperation auch zweidimensional, d.h. so wie in der vorliegenden Zeichenebene dargestellt, durchgeführt werden. In anderen Worten ausgedrückt bedeutet dies, daß nacheinander in infinitesimal kleinen Schritten eine (hier linksseitig der Schweißnaht 3) parallel zum Oberblech 1 verlaufende Gerade (ebenfalls mit E bezeichnet, da in der Ebene E liegend) ermittelt und mit dem Oberblech 1 im Bereich von dessen Radius Rᵢ zum Schnitt gebracht wird, woraus sich der Schnittpunkt S ergibt, in den hinein die Brennfleckmitte M des Schweiß-Laserstrahles 7 positioniert wird.

Hinsichtlich vieler Merkmale, welche daher auch nicht näher erläutert werden, ist eine Laserstrahl-Schweißvorrichtung 10, mit Hilfe derer dasbeschriebene Laserstrahl-Schweißverfahren durchgeführt werden kann, wie üblich aufgebaut, wie die bereits genannten **Figuren 2, 3** zeigen. Lediglich der Vollständigkeit halber wird zum diesbezüglich bekannten Stand der Technik nochmals auf die eingangs bereits genannte EP 0 707 920 A2 verwiesen, da darin bereits eine Laserstrahlvorrichtung mit einem eine Bahnkontrolle ermöglichenden Sensor gezeigt ist. In den **Figuren 2, 3** erkennt man somit neben einem wie üblich vorhandenem Fokussierspiegel 11, mit Hilfe dessen der von seitlich herangeführte Laserstrahl 7' als Schweiß-Laserstrahl 7 auf die durch die Überlapp-Schweißnaht 3 miteinander zu verbindenen Bleche 1, 2 fokussiert wird, eine übliche Druckrolle 12, mit Hilfe derer der Abstand zwischen den Blechen 1, 2 und dem Fokussierspiegel 11 dessen Bündelungscharakteristik entsprechend eingestellt bzw. eingehalten wird.

Abweichend vom üblichen Stand der Technik ist bei der in den **Figuren 2, 3** dargestellten Laserstrahl-Schweißvorrichtung 10 jedoch der Fokussierspiegel 11 quer zur Überlappnaht 3 (diese verläuft wie bereits gesagt senkrecht zur Zeichenebene) verfahrbar, und zwar gemäß Pfeilrichtung 13. Aufgrund dieser Verfahrbarkeit kann der Fokussierspiegel 11 eine weitere Funktion übernehmen, nämlich den Schweiß-Laserstrahl 7 derart umlenken, daß er mit seiner Brennfleckmitte M stets in eine Sollposition fokussiert wird, die im vom Sensor 8 erkannten Sollbereich 5 bzw. auf dem/der von der Recheneinheit 9 ermittelten Schnittpunkt/Schnittlinie S liegt. Selbstverständlich kann in einer alternativen Ausführungsform für diese Funktion auch ein separater Umlenkspiegel vorgesehen sein. Stets ist es mit Hilfe eines derartigen quer zur Überlappnaht 3 verfahrbaren oder ggf. auch geeignet schwenkbaren Umlenkspiegels (oder in besonders vorteilhafter Weise mit Hilfe des verfahrbaren Fokussierspiegels 11) auf einfache Weise möglich, den Schweiß-Laserstrahl 7 exakt (und schnell) in den erläuterten Sollbereich 5 hinein bzw. auf den besagten Schnittpunkt S oder längs der besagten Schnittlinie S zu fokussieren, ohne hierbei die gesamte Laserstrahl-Schweißvorrichtung 10 bspw. mit Hilfe eines diese tragenden Roboters unterschiedlich, d.h. mit fortschreitend entstehender Überlappnaht 3 in Pfeilrichtung 13 jeweils neu positionieren zu müssen.

Um den Fokussierspiegel 11 wie soeben erläutert gemäß Pfeilrichtung 13 verfahren zu können, ist dieser selbstverständlich in geeigneter (hier nicht näher dargestellter) Weise geführt und trägt beim hier erläuterten Ausführungsbeispiel eine Spindel oder eine Zahnstange 14, mit der das Ritzel 15 eines mit einem Inkrementalgeber versehenen elektrischen Schrittmotors kämmt. Somit kennt die Recheneinheit 9 exakt die jeweilige Position des Fokussierspiegels 11 und kann daher unter Verarbeitung der Signale des Sensors 8 den Schweiß-Laserstrahl 7 stets exakt in den gewünschten und oben ausführlich beschriebenen Sollbereich 5 hinein fokussieren. Vorteilhafterweise kann der Sensor 8 mit der Recheneinheit 9 und dem darin implementierten, oben beschriebenen Rechenprogramm quasi integrierter Bestandteil einer/der Laserstrahl-Schweißvorrichtung 10 sein. Eine qualitativ hochwertige Überlapp-Schweißnaht 3 ohne jegliche durch Ausgasung der Schicht auf den Blechen 1, 2 verursachte Störstellen ist mit einer derartigen Laserstrahl-Schweißvorrichtung 10 unter Anwendung des beschriebenen Laserstrahl-Schweißverfahrens erzielbar, wobei noch darauf hingewiesen sei, daß selbstverständlich eine Vielzahl von Details insbesondere konstruktiver Art durchaus abweichend vom gezeigten Ausführungsbeispiel bzw. von obiger Beschreibung gestaltet sein kann bzw. können, ohne den Inhalt der Patentansprüche zu verlassen.

### Bezugszeichenliste:

- 1: Oberblech
- 2: Unterblech
- 3: Überlapp(-Schweiß)naht
- 4: Ausgasungsraum
- 5: Sollbereich für 3
- 6: Ausgangspunkt von Rᵢ
- 7: Schweiß-Laserstrahl
- 7': Laserstrahl
- 8: Sensor zur Lageerkennung von Rᵢ
- 9: Recheneinheit
- 10: Laserstrahl-Schweißvorrichtung
- 11: Fokussierspiegel
- 12: Druckrolle
- 13: Pfeilrichtung: Verfahrbarkeit von 11, quer zu 3

- h: Abstand zwischen 1 und E
- x: Höhe der durch Rᵢ und Rₐ beschriebenen Stufe
- E: (virtuelle) Ebene bzw. Gerade
- M: Brennfleckmitte von 7
- Rᵢ: (Innen-) Radius des Oberblechs 1
- Rₐ: Außen-Radius
- S: Schnittlinie (bzw. Schnittpunkt) zwischen E und Rᵢ

## Patentansprüche

1. Laserstrahl-Schweißverfahren für Überlappnähte (3) an beschichteten Blechen (1, 2), insbesondere an zinkbeschichteten Stahlblechen, wobei ein Ausgasungsraum (4) für das im Schweißbereich verdampfende Beschichtungsmaterial vorgesehen ist,
**dadurch gekennzeichnet, daß** die beiden miteinander zu verschweißenden Bleche (1, 2) auf der einen Seite der Überlappnaht (3) aufeinander aufliegen und auf der anderen Seite der Überlappnaht (3) aufgrund eines im Oberblech (1) vorgesehenen Radius (Rᵢ) geringfügig voneinander beabstandet sind, um dort zwischen sich den Ausgasungsraum (4) zu bilden,
und daß mittels eines Sensors (8) dieser Radius (Rᵢ) des Oberbleches (1) erkannt und in einer Recheneinheit (9) dahingehend ausgewertet wird, daß die Brennfleckmitte (M) des Schweiß-Laserstrahles (7) und somit auch die Überlappnaht (3) in einen engen Sollbereich (5) positioniert wird, der innerhalb des Bereiches dieses Radius (Rᵢ) des Oberbleches (1) liegt.

2. Laserstrahl-Schweißverfahren nach Anspruch 1,
**dadurch gekennzeichnet, daß** der Radius (Rᵢ) des Oberbleches (1) in der Größenordnung zwischen 1,0 mm bis 3,0 mm liegt, und daß sich der Sollbereich (5), in den hinein die Brennfleckmitte (M) des Schweiß-Laserstrahles (7) positioniert wird, ausgehend vom Anfangspunkt (6) des Radius (Rᵢ) über maximal 0,8 mm zum Ausgasungsraum (4) hin erstreckt.

3. Laserstrahl-Schweißverfahren nach Anspruch 1 oder 2,
**dadurch gekennzeichnet** in der Recheneinheit (9) eine Schnittlinie (S) zwischen der Oberfläche des Oberblechs (1) im Bereich von dessen Radius (Rᵢ) und einer virtuellen Ebene (E) ermittelt wird, und daß die Brennfleckmitte (M) des Schweiß-Laserstrahles (7) im wesentlichen längs dieser Schnittlinie (S) positioniert wird, wobei die virtuelle Ebene (E) unter einem Abstand (h) parallel zu demjenigen Flächenabschnitt des Oberbleches (1) verläuft, der sich auf dem Unterblech aufliegend auf der dem Ausgasungsraum (4) gegenüberliegenden Seite der Überlappnaht (3) befindet.

4. Laserstrahl-Schweißverfahren nach einem der vorangegangenen Ansprüche,
**dadurch gekennzeichnet, daß** der Schweiß-Laserstrahl (7) mittels eines im wesentlichen quer zur Überlappnaht (3) verfahrbaren oder geeignet schwenkbaren Umlenkspiegels in den Sollbereich (5) fokussiert wird.

5. Laserstrahl-Schweißvorrichtung zur Durchführung des Laserstrahl-Schweißverfahrens nach einem der vorangegangenen Ansprüche, mit einem eine markante Ausbildung am Oberblech (1) der miteinander zu verschweißenden Bleche (1, 2) erkennenden optischen Sensor (8) sowie mit einer den Schweiß-Laserstrahl (7) anhand der Signale dieses Sensors (8) positionierenden Recheneinheit (9),
**dadurch gekennzeichnet, daß** der Sensor (8) einen im Oberblech (1) vorgesehenen Radius (Rᵢ) erkennt und die Recheneinheit (9) eine Schnittlinie (S) zwischen der Oberfläche des Oberblechs (1) im Bereich von dessen Radius (Rᵢ) und einer virtuellen Ebene (E) ermittelt, wonach die Brennfleckmitte des Schweiß-Laserstrahles (7) im wesentlichen längs dieser Schnittlinie (S) positioniert wird, und wobei die virtuelle Ebene (E) unter einem Abstand (h) parallel zu demjenigen Flächenabschnitt des Oberbleches (1) verläuft, der sich auf dem Unterblech aufliegend auf der dem Ausgasungsraum (4) gegenüberliegenden Seite der Überlappnaht (3) befindet.

6. Laserstrahl-Schweißvorrichtung zur Durchführung des Laserstrahl-Schweißverfahrens nach einem der Ansprüche 1 - 4, mit einem eine markante Ausbildung am Oberblech (1) der miteinander zu verschweißenden Bleche (1, 2) erkennenden optischen Sensor (8) sowie mit einer den Schweiß-Laserstrahl (7) anhand der Signale dieses Sensors (8) positionierenden Recheneinheit (9),
**dadurch gekennzeichnet, daß** ein ansonsten üblicher Fokussierspiegel (11) mittels eines mit einem Inkrementalgeber versehenen Schrittmotors quer zum Verlauf der Schweißnaht (3) verfahrbar ist und somit die Funktion des Umlenkspiegels zur gewünschten Positionierung des Schweiß-Laserstrahles (7) anhand der vom an der Schweißvorrichtung (10) befestigten Sensor (8) gewonnenen und in der Recheneinheit (9) ausgewerteten Lageerkennung übernimmt.

## Claims

1. A method of laser-beam welding for overlapping seams (3) on coated metal sheets (1, 2), especially on zinc-coated steel sheets, wherein an outgassing space (4) is provided for the coating material evaporating in the welding region,
**characterised in that** the two sheets (1, 2) for welding together rest on one another on one side of the overlap seam (3) whereas on the other side of the overlap seam (3) they are at a slight distance from one another owing to a radius (Rᵢ) provided in the top plate (1), in order to form the outgassing space (4) between them there, and
by means of a sensor (8), the radius (Rᵢ) in the top sheet (1) is detected and evaluated in a computer unit (9) in order to position the centre (M) of the focal spot of the welding laser beam (7) and consequently also position the overlap seam (3) in a narrow set region (5) lying within the area of the radius (Rᵢ) on the top sheet (1).

2. A method of laser beam welding according to claim 1,
**characterised in that** the radius (Rᵢ) on the top plate (1) is of the order of 1.0 mm to 3.0 mm and the set region (5) in which the centre (M) of the focal spot of the welding laser beam (7) is positioned extends from the origin (6) of the radius (Rᵢ) for up to 0.8 mm towards the outgassing space (4).

3. A method of laser-beam welding according to claim 1 or 2,
**characterised in that** a line of intersection (S) between a virtual plane (E) and the surface of the top sheet (1) in the area of the radius (Rᵢ) thereof is determined in the computer unit (9) and the centre (M) of the focal spot of the welding laser beam (7) is positioned substantially along the said line (S) of intersection, wherein the virtual plane (E) extends at a distance (h) parallel to that surface portion of the top sheet (1) which rests on the bottom sheet on the side of the overlap seam (3) remote from the outgassing space (4).

4. A method of laser beam welding according to any of the preceding claims,
**characterised in that** the welding laser beam (7) is focused on to the set region (5) by a deflecting mirror which is suitably pivotable or movable substantially transversely of the overlap seam (3).

5. A laser beam welding device for working the method according to any of the preceding claims, comprising an optical sensor (8) which recognises a conspicuous shape on the upper sheet (1) of the two sheets (1, 2) for welding together and also comprising a computer unit (9) which positions the welding laser beam (7) on the basis of the signals from the sensor (8),
**characterised in that** the sensor (8) recognises a radius (Rᵢ) provided on the top sheet (1) and the computer unit (9) determines a line of intersection (S) between a virtual plane (E) and the surface of the top sheet (1) in the area of the radius (Rᵢ) thereof, after which the centre of the focal spot of the welding laser beam (7) is positioned substantially along the line (S) of intersection, and wherein the vertical plane (E) extends at a distance (h) and parallel to that surface portion of the top sheet (1) which rests on the bottom sheet on the side of the overlap seam (3) remote from the outgassing space (4).

6. A laser-beam welding device for working the method according to any one of claims 1 - 4, comprising an optical sensor (8) which recognises a conspicuous shape on the upper sheet (1) of the two sheets (1,2) for welding together and also comprising a computer unit (9) which positions the welding laser beam (7) on the basis of the signals from the sensor (8), **characterised in that** an otherwise conventional focusing mirror (11) is movable parallel to the weld seam (3) by a stepping motor provided with an incremental transmitter and thus takes over the function of the deflecting mirror in positioning the welding laser beam (7) as required, using the position which is recognised by the sensor (8) fastened to the welding device (10) and which is evaluated in the computer unit (9).

## Revendications

1. Procédé de soudage par faisceau laser pour des joints par recouvrement (3) de tôles revêtues (1, 2), en particulier de tôles d'acier zinguées, avec un espace de dégazage (4) prévu pour le matériau de revêtement s'évaporant dans la zone de soudage,
**caractérisé en ce que**
les deux tôles à souder ensembles (1,2) reposent l'une sur l'autre de l'un des côtés du joint par recouvrement (3) et sont, de l'autre côté du joint par recouvrement (3), en raison d'un rayon (Ri) prévu dans la tôle supérieure (1), légèrement écartées l'une de l'autre de façon à y former entre elles l'espace de dégazage (4), et ce rayon (Ri) de la tôle supérieure (1) est détecté au moyen d'un capteur (8) et exploité dans une unité de calcul (9) de façon que le centre de foyer (M) du faisceau laser de soudage (7) et, ainsi, également le joint par recouvrement (3), soient positionnés dans une zone de consigne (5) étroite qui figure à l'intérieur de la zone de ce rayon (Ri) de la tôle supérieure (1).

2. Procédé de soudage par faisceau laser selon la revendication 1,
**caractérisé en ce que**
le rayon (Ri) de la tôle supérieure (1) est d'un ordre de grandeur de 1,0 mm à 3,0 mm et la zone de consigne (5) à l'intérieur de laquelle le centre de foyer (M) du faisceau laser de soudage (7) est positionné, s'étend, en partant du point de début (6) du rayon (Ri) sur, au maximum, 0,8 mm en direction de l'espace de dégazage (4).

3. Procédé de soudage par faisceau laser selon la revendication 1 ou 2,
**caractérisé en ce qu'**
une ligne d'intersection (S) entre la surface de la tôle supérieure (1) dans la zone de son rayon (Ri) et un plan virtuel (E) est déterminée dans l'unité de calcul (9), et le centre de foyer (M) du faisceau laser de soudage (7) est positionné pour l'essentiel le long de cette ligne d'intersection (M), le plan virtuel (E) s'étendant à une distance (h) parallèlement à la section de surface de la tôle supérieure (1) qui figure au côté du joint de recouvrement (3) opposé à l'espace de dégazage (4) reposant sur la tôle inférieure.

4. Procédé de soudage par faisceau laser selon l'une quelconque des revendications précédentes,
**caractérisé en ce que**
le faisceau laser de soudage (7) est focalisé sur la zone de consigne (5) au moyen d'un miroir de déviation pouvant se déplacer ou basculer de manière appropriée pour l'essentiel transversalement par rapport au joint par recouvrement (3).

5. Dispositif de soudage par faisceau laser pour appliquer le procédé de soudage par faisceau laser selon l'une quelconque des revendications précédentes comportant un capteur optique (8) détectant une déformation marquante sur la tôle supérieure (1) des tôles (1, 2) à souder ensemble ainsi qu'avec une unité de calcul positionnant le faisceau laser de soudage (7) en fonction des signaux de ce capteur (8),
**caractérisé en ce que**
le capteur (8) détecte un rayon (Ri) prévu dans la tôle supérieure (1) et l'unité de calcul (9) détermine une ligne d'intersection (S) entre la surface de la tôle supérieure (1) dans la zone de son rayon (Ri) et un plan virtuel (E), après quoi, le centre de foyer du faisceau laser de soudage (7) est positionné pour l'essentiel le long de cette ligne d'intersection (S), et le plan virtuel (E) s'étend parallèlement à une distance (h) du segment de surface de la tôle supérieure (1) qui se trouve sur le côté du joint de recouvrement (3) opposé à l'espace de dégazage (4) reposant sur la tôle inférieure.

6. Dispositif de soudage par faisceau laser pour appliquer le procédé de soudage par faisceau laser selon l'une quelconque des revendications 1 à 4, comportant un capteur optique (8) détectant une déformation marquante sur la tôle supérieure (1) des tôles (1, 2) à souder ensemble ainsi qu'une unité de calcul positionnant le faisceau laser de soudage (7) en fonction des signaux de ce capteur (8),
**caractérisé en ce qu'**
un miroir de focalisation (11) usuel peut être déplacé au moyen d'un moteur pas à pas pourvu d'un codeur incrémental, transversalement au parcours du joint par soudage (3), et assume ainsi la fonction du miroir de déviation pour positionner de manière souhaitée le faisceau laser de soudage (7) à l'aide de la détection d'emplacement faite par le capteur (8) fixé au dispositif de soudage (10) et exploitée dans l'unité de calcul (9).
